(19) **Europäisches Patentamt European Patent Office Office européen des brevets**

(11) **EP 4 255 605 B1**

(12) **EUROPEAN PATENT SPECIFICATION**

(45) Date of publication and mention
of the grant of the patent:
**04.03.2026 Bulletin 2026/10**

(51) International Patent Classification (IPC):
**B01D 39/20** (2006.01)    **B05D 7/24** (2006.01)
**F01N 3/035** (2006.01)

(21) Application number: **21901350.5**

(22) Date of filing: **01.12.2021**

(52) Cooperative Patent Classification (CPC):
**B01D 39/2068; B01D 53/9445; F01N 3/0222;**
**F01N 3/035;** B01D 2239/0471; B01D 2239/10;
B01D 2255/1023; B01D 2255/1025;
B01D 2255/2092; B01D 2255/905; B05D 7/22;
B05D 2401/32; F01N 2330/06; F01N 2510/0682;
Y02T 10/12

(86) International application number:
**PCT/US2021/061319**

(87) International publication number:
**WO 2022/119874 (09.06.2022 Gazette 2022/23)**

(54) **PARTICULATE FILTER HAVING A CENTRALIZED-DISTRIBUTED FUNCTIONAL MATERIAL LAYER AND PROCESS FOR PREPARING THE SAME**

PARTIKELFILTER MIT EINER ZENTRALISIERTEN VERTEILTEN FUNKTIONSMATERIALSCHICHT UND HERSTELLUNGSVERFAHREN DAFÜR

FILTRE À PARTICULES AYANT UNE COUCHE DE MATÉRIAU FONCTIONNEL À DISTRIBUTION CENTRALISÉE ET SON PROCESSUS DE PRÉPARATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2020 PCT/CN2020/133915**

(43) Date of publication of application:
**11.10.2023 Bulletin 2023/41**

(73) Proprietor: **BASF Mobile Emissions Catalysts LLC**
**Iselin, NJ 08830 (US)**

(72) Inventors:
• **QI, Yun Fei**
**Shanghai 201206 (CN)**
• **WALTZ, Florian**
**30173 Hannover (DE)**
• **SIEMUND, Stephan**
**30173 Hannover (DE)**

• **SHEN, Ye**
**Shanghai 201206 (CN)**
• **SIANI, Attilio**
**30161 Hannover (DE)**
• **SCHMITZ, Thomas**
**30173 Hannover (DE)**
• **YIN, Xiao Min**
**Shanghai 201206 (CN)**
• **JIANG, Jun Cong**
**Shanghai 201206 (CN)**

(74) Representative: **Altmann Stößel Dick Patentanwälte PartG mbB**
**Isartorplatz 1**
**80331 München (DE)**

(56) References cited:
DE-A1- 102006 038 406     DE-A1- 102019 204 520
US-A1- 2010 126 133     US-A1- 2011 162 346
US-A1- 2013 149 458     US-A1- 2013 149 458
US-B2- 7 044 992     US-B2- 9 051 857

## Description

### Technology Field

The present invention relates to a particulate filter for the treatment of exhaust gas from an internal combustion engine, wherein the particulate filter has a centralized-distributed functional material layer, relates to a process for preparing the particulate filter and relates to a method for the treatment of exhaust gas from an internal combustion engine.

### Background

The exhaust gas from internal combustion engine contain in relatively large part of nitrogen, water vapor, and carbon dioxide; but the exhaust gas also contains in relatively small part of noxious and/or toxic substances, such as carbon monoxide from incomplete combustion, hydrocarbons from un-burnt fuel, nitrogen oxides (NOx) from excessive combustion temperatures, and particulate matter (PM).

Certain internal combustion engines, for example lean-burn engines, diesel engines, natural gas engines, power plants, incinerators, and gasoline engines, tend to produce an exhaust gas with a considerable amount of soot and other particulate matter. Usually, particulate matter emissions can be remedied by passing the PM-containing exhaust gas through a particulate filter.

Diesel particulate filters have proven to be efficient at removing carbon soot from the exhaust gas of the diesel engines. The most widely used diesel particulate filter is the wall-flow filter which filters the diesel exhaust gas by capturing the soot on the porous walls of the filter body. The wall-flow filter is designed to provide for nearly complete filtration of soot without significantly hindering the exhaust flow.

As the layer of soot collects on the surfaces of the inlet sides of the filter, the lower permeability of the soot layer causes a pressure drop across the filter and a gradual rise in the back pressure of the filter against the engine, causes the engine to work harder, thus affects the engine operating efficiency. Eventually, the pressure drop becomes unacceptable and regeneration of the filter becomes necessary.

Particulate emissions for gasoline engines are being subjected to regulations, including Euro 6 (2014) standards. Certain gasoline direct injection (GDI) engines have been developed whose operating regimes result in the formation of fine particulates. Aftertreatment systems for gasoline engines need to meet the particulate matter standards. In contrast to the particulates generated by diesel lean burning engines, the particulates generated by gasoline engines, such as GDI engines, tend to be finer and in lesser quantities. This is due to the different combustion conditions of a diesel engine as compared to a gasoline engine. For example, gasoline engines run at a higher temperature than diesel engines. Also, hydrocarbon components are different in the emissions of gasoline engines as compared to diesel engines.

The vehicle manufacturers require gasoline particulate filters (GPFs) to have both high fresh filtration efficiency and low backpressure. However, as there is little engine-out particulate mass and exhaust gas has higher temperature from a gasoline engine, soot cake generated during the pre-conditioning of the aftertreatment system before testing is often negligible. This soot cake is responsible at least in part for the high filtration efficiency of diesel particulate filters, and with a diesel engine an effective soot cake can be formed in 10-20 km of driving. As this effect is not generally achievable with a gasoline engine, the target fresh filtration efficiency is generally met by using a higher washcoat loading and this increases the pressure drop across the filter. This consideration only applies to fresh filters in order to satisfy a requirement for an end-of-line test at the OEM.

On December 23, 2016, the Ministry of Environmental Protection (MEP) of the People's Republic of China published the final legislation for the China 6 limits and measurement methods for emissions from light-duty vehicles (GB18352.6-2016; hereafter referred to as China 6), which is much stricter than the China 5 emission standard. Especially, China 6b incorporates limits on particulate matter (PM) and adopts the on-board diagnostic (OBD) requirements. Furthermore, it is implemented that vehicles should be tested under World Harmonized Light-duty Vehicle Test Cycle (WLTC). WLTC includes many steep accelerations and prolonged high-speed requirements, which demand high power output that could have caused "open-loop" situation (as fuel paddle needs to be pushed all the way down) at extended time (e.g., >5 sec) under rich (lambda <1) or under deep rich (lambda <0.8) conditions.

Since the public and government are seriously concerned about particulate emission from mobile sources, there is a need to provide an improved particulate filter having excellent filtration efficiency and low backpressure. The state of the art is disclosed in documents US 2011/162346 A1 (for the structure of the filter) or US 2013/149458 A1 (for the use of inorganic material providing a certain size of the particles).

## Summary of the Invention

It is an object of the present invention to provide a particulate filter having a centralized-distributed functional material layer in the radial direction, which shows excellent filtration efficiency and low backpressure. Another object of the present invention is to provide a process for preparing the particulate filter for the treatment of exhaust gas from an internal combustion engine. A further object of the present invention is to provide a method for the treatment of exhaust gas from an internal combustion engine, which comprises flowing the exhaust gas from the engine through the particulate filter according to the present invention.

It has been surprisingly found that the above objects can be achieved by the subject-matter of claim 1.

The particulate filter according to the present invention has a centralized-distributed functional material layer in the radial direction, shows excellent filtration efficiency even at a low loading of the functional material layer and also shows low backpressure. In addition, the process according to the present invention allowed to produce the particulate filter having a centralized-distributed functional material layer in the radial direction in a very simple and efficient way.

## Description of the Drawing

FIG. 1 (a) and FIG.1 (b) show an exemplary wall-flow filter;

FIG. 2 shows backpressure characteristics of particulate filters prepared in examples 1, 2 and 3;

FIG. 3 shows tailpipe (TP) PN emission of particulate filters prepared in examples 1, 2 and 3;

FIG. 4 shows backpressure characteristics of particulate filters prepared in examples 7, 8, 9 and 10; and

FIG. 5 shows tailpipe (TP) PN emission of particulate filters prepared in examples 7, 8, 9 and 10.

## Embodiment of the Invention

The undefined article "a", "an", "the" means one or more of the species designated by the term following said article.

In the context of the present disclosure, any specific values mentioned for a feature (comprising the specific values mentioned in a range as the end point) can be recombined to form a new range.

In the context of the present disclosure, each aspect so defined may be combined with any other aspect or aspects unless clearly indicated to the contrary. In particular, any feature indicated as being preferred or advantageous may be combined with any other feature or features indicated as being preferred or advantageous.

One aspect of the present invention is directed to a particulate filter for the treatment of exhaust gas from an internal combustion engine, wherein the particulate filter comprises a functional material layer, and the amount of the functional material layer in the region which is around the whole central axis of the particulate filter and accounts for 11 .1 vol. % of the total volume of the particulate filter, is in the range from 13 to 40 wt.%, based on the total weight of the functional material layer.

The particulate filter is typically formed of a porous substrate. The porous substrate may comprise a ceramic material such as, for example, cordierite, silicon carbide, silicon nitride, zirconia, mullite, spodumene, alumina-silica-magnesia, zirconium silicate, and/or aluminium titanate, typically cordierite or silicon carbide. The porous substrate may be a porous substrate of the type typically used in emission treatment systems of internal combustion engines.

The internal combustion engine may be a lean-burn engine, a diesel engine, a natural gas engine, a power plant, an incinerator, or a gasoline engine.

The porous substrate may exhibit a conventional honey-comb structure. The filter may take the form of a conventional "through-flow filter". Alternatively, the filter may take the form of a conventional "wall flow filter" (WFF). Such filters are known in the art.

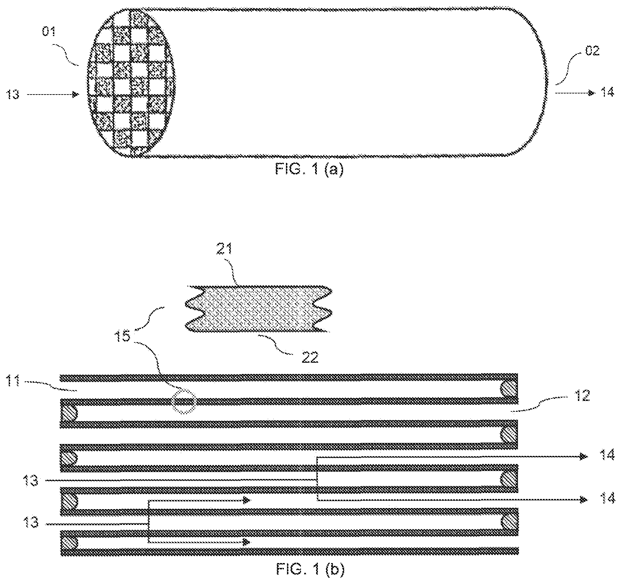

The particulate filter is preferably a wall-flow filter. Referring to FIG. 1 (a) and FIG. 1 (b), an exemplary wall-flow filter is provided. Wall-flow filters work by forcing a flow of exhaust gases (13) (including particulate matter) to pass through walls formed of a porous material.

A wall flow filter typically has a first face and a second face defining a longitudinal direction therebetween. In use, one of the first face and the second face will be the inlet face for exhaust gases (13) and the other will be the outlet face for the treated exhaust gases (14). A conventional wall flow filter has first and second pluralities of channels extending in the longitudinal direction. The first plurality of channels (11) is open at the inlet face (01) and closed at the outlet face (02). The second plurality of channels (12) is open at the outlet face (02) and closed at the inlet face (01). The channels are preferably parallel to each other to provide a constant wall thickness between the channels. As a result, gases entering one of the plurality of channels from the inlet face cannot leave the monolith without diffusing through the channel walls (15) from the inlet side (21) to the outlet side (22) into the other plurality of channels. The channels are closed with the introduction of a sealant material into the open end of a channel. Preferably the number of channels in the first plurality is equal to the number of channels in the second plurality, and each plurality is evenly distributed throughout the monolith. Preferably, within a plane orthogonal to the longitudinal direction, the wall flow filter has from 100 to 500 channels per square inch, preferably from 200 to 400. For example, on the inlet face (01), the density of open channels and closed channels is from 200 to 400 channels per square inch. The channels can have cross sections that are rectangular, square, circular, oval, triangular, hexagonal, or other polygonal shapes.

According to the present invention, the amount of the functional material layer in the region which is around the whole central axis of the particulate filter and accounts for 11.1 vol. % of the total volume of the particulate filter, is in the range from 13 to 40 wt.%, for example 14 wt.%, 15 wt.%, 16 wt.%, 18 wt.%, 20 wt.%, 22 wt.%, 25 wt.%, 28 wt.%, 30 wt.%, 32 wt.%, 35 wt.%, 38 wt.%, based on the total weight of the functional material layer. As mentioned above, any specific values mentioned for a feature (comprising the specific values mentioned in a range as the end point) can be recombined to form a new range, for example new ranges 13 to 35 wt.% or 16 to 25 wt.% can be mentioned here.

In a preferred embodiment, the amount of the functional material layer in the region which is around the whole central axis of the particulate filter and accounts for 11.1 vol. % of the total volume of the particulate filter, is in the range from 15 to 30 wt.%, based on the total weight of the functional material layer.

In the context of the present invention, "the region which is around the whole central axis" means said region shares the same central axis with the filter". Taking a particulate filter in the form of cylinder (1) with a radius of R and a height of H as an example, the expression "the region which is around the whole central axis of the particulate filter and accounts for 11.1 vol. % of the total volume of the particulate filter" means a small cylinder sharing the same central axis with the cylinder (1) and having a radius of 1/3 R and a height of H. For the particulate filter in the cube (1) with a side-length of A, the expression "the region which is around the whole central axis of the particulate filter and accounts for 11.1 vol. % of the total volume of the particulate filter" means a small cuboid sharing the same central axis with the cube (1), wherein both the length and width of the cuboid is 1/3 A and the height of the cuboid is A.

The amount of functional material layer in the region around the whole central axis of the particulate filter can be determined through elemental analysis. For example, firstly, the radial distribution of the functional material layer can be determined through elemental analysis on defined sample area. Then, the amount of functional material layer in the region can be determined according to the radial distribution of the functional material.

For example, cores within defined radius of the filter can be taken from the filter. Then, the sample can be analyzed on a Malvem Panalytical Axios FAST wavelength-dispersive X-ray fluorescence (XRF) spectrometer.

According to the present invention, the amount of the functional material layer in the region which is around the whole central axis of the particulate filter and accounts for 25 vol. % of the total volume of the particulate filter, can be in the range from 28 to 60 wt.%, for example 30 wt.%, 32 wt.%, 35 wt.%, 40 wt.%, 45 wt.%, 50 wt.%, 55 wt.%, preferably from 31 to 55 wt.%, based on the total weight of the functional material layer.

If the particulate filter is in the form of cylinder (1) with a radius of R and a height of H, then the region which is around the whole central axis of the particulate filter and accounts for 25 vol. % of the total volume of the particulate filter, corresponds to a small cylinder sharing the same central axis with the cylinder (1) and having a radius of 1/2 R and a height of H. If the particulate filter is in the form of cube (1) with a side-length of A, the region which is around the whole central axis of the particulate filter and accounts for 25 vol. % of the total volume of the particulate filter, corresponds to a small cuboid sharing the same central axis with the cube (1), wherein both the length and width of the cuboid is 1/2 A and the height of the cuboid is A.

In a preferred embodiment, the amount of the functional material layer in the region which is around the whole central axis of the particulate filter and accounts for 44.4 vol. % of the total volume of the particulate filter, is in the range from 40 to 90 wt.%, for example 45 wt.%, 50 wt.%, 55 wt.%, 60 wt.%, 65 wt.%, 70 wt.%, 75 wt.%, 80 wt.%, 85 wt.%, preferably from 56 to 80 wt.%, based on the total weight of the functional material layer.

If the particulate filter is in the form of cylinder (1) with a radius of R and a height of H, then the region which is around the whole central axis of the particulate filter and accounts for 44.4 vol. % of the total volume of the particulate filter, corresponds to a small cylinder sharing the same central axis with the cylinder (1) and having a radius of 2/3 R and a height of H. If the particulate filter is in the form of cube (1) with a side-length of A, the region which is around the whole central axis of the particulate filter and accounts for 44.4 vol. % of the total volume of the particulate filter, corresponds to a small cuboid sharing the same central axis with the cube (1), wherein both the length and width of the cuboid is 2/3 A and the height of the cuboid is A.

According to a preferred embodiment, the content of the functional material layer in the region which is around the whole central axis of the particulate filter and accounts for 11.1 vol. % of the total volume of the particulate filter is higher than the content of the functional material layer in the region which is around the whole central axis of the particulate filter and accounts for 25 vol. % of the total volume of the particulate filter.

According to a preferred embodiment, the content of the functional material layer in the region which is around the whole central axis of the particulate filter and accounts for 25 vol. % of the total volume of the particulate filter is higher than the content of the functional material layer in the region which is around the whole central axis of the particulate filter and accounts for 44.4 vol. % of the total volume of the particulate filter.

According to a further preferred embodiment, the content of the functional material layer in the region which is around the whole central axis of the particulate filter and accounts for 44.4 vol. % of the total volume of the particulate filter is higher than the content of the functional material layer in the remainder region of the particulate filter.

The content of the functional material layer in a region can be calculated by the amount of the functional material layer in the region divided by the volume of the region.

In one embodiment, the filter has an inlet side and an outlet side; and the functional material layer is coated onto the inlet side, the outlet side, or both sides of the particulate filter.

The average loading of the functional material layer in the particulate filter can be in the range from 0.5 to 20 g/L, for example 1 g/L, 1.5 g/L, 2 g/L, 2.5 g/L, 3 g/L, 3.5 g/L, 4 g/L, 4.5 g/L, 5 g/L, 8 g/L, 10 g/L, 15 g/L, 18 g/L, preferably from 1 to 10 g/L, more preferably from 1.5 to 7.5 g/L or from 1.5 to 4.5 g/L.

According to the present invention, functional material layer comprises at least one inorganic material, preferably, the inorganic material is selected from inorganic oxide and inorganic salt.

The inorganic material is selected from alumina, zirconia, ceria, silica, titania, magnesium oxide, zinc oxide, manganese oxide, calcium oxide, silicate zeolite, alumino silicate zeolite, a rare earth metal oxide other than ceria, a mixed oxide comprising two or more of Al, Zr, Ti, Si, and Ce, cerium zirconium mixed oxide, hydrated alumina, calcium carbonate and zinc carbonate, preferably alumina, such as gamma alumina.

According to the invention, the inorganic material has a D90 of 3 to 10 $\mu$m.

According to the invention, the inorganic material has a D50 of 1.8 to 6 $\mu$m.

According to the invention, the inorganic material has a D10 of 0.8 to 1.5 $\mu$m. "D90", "D50" and "D10" have their usual meaning of referring to the point where the cumulative weight from the small-particle-diameter side reaches 90%, 50% and 10% in the cumulative particle size distribution. D90 is the value determined by measuring the particle size distribution, respectively. The particle size distribution is measured by using laser diffraction particle size distribution analyzer.

In one embodiment, the inorganic material has high specific BET surface area, for example in the range from 100 to 250 $m^2 \cdot g^{-1}$, preferably in the range from 120 to 200 $m^2 \cdot g^{-1}$ characterized by 77K nitrogen sorption. In a preferred embodiment, the inorganic material has a specific surface area characterized by 77K nitrogen sorption in the range from 50 to 120 $m^2 \cdot g^{-1}$, preferably 60 to 95 $m^2 \cdot g^{-1}$ after 4 h calcination in air at 1000°C.

In one embodiment, the functional material layer further comprises a platinum group metal (PGM), preferably selected from the group consisting of platinum (Pt), palladium (Pd) and rhodium (Rh), and mixtures thereof. The PGM is present in a catalytically effective amount to convert NOx, CO and hydrocarbons in an exhaust gas to $N_2$, $CO_2$ and $H_2O$ and to cause the oxidation of particulate matter trapped on the particulate filter. In a preferred embodiment, the functional material layer comprises a PGM containing inorganic material. The PGM containing inorganic material can be prepared by impregnating the inorganic material with a PGM containing liquid, for example an amine-complex solution or solution of the nitrate of PGM (for example platinum nitrate, palladium nitrate, and rhodium nitrate). After the impregnation, the mixture can be calcinated.

In one embodiment, the particulate filter further comprises a catalytic washcoat. The use of the catalytic washcoat may serve to treat components of an internal combustion exhaust gas such as, for example, unburned hydrocarbons, carbon monoxide and/or nitrogen oxide. The catalytic washcoat comprises one or more of a selective catalytic reduction (SCR) catalyst, a diesel oxidation catalyst (DOC), a three-way conversion (TWC) catalyst, an AMOx catalyst, a NOx trap, a NOx absorber catalyst, a hydrocarbon trap catalyst. The catalytic washcoat is applied to the particulate filter prior to application of the functional material layer. The catalytic washcoat can be present as a separate coating on the particulate filter or the catalytic washcoat can be integral with the particulate filter, e.g. either the catalytic washcoat can be impregnated as a solution or slurry into the material of a virgin particulate filter, or the catalytic washcoat can be combined with ingredients that form a structure of the substrate monolith that is then extruded into a flow-through monolith and, following drying and calcination. Alternate ends of the channels are blocked in a chequer board pattern arrangement at one end of the substrate monolith and unblocked channels are alternately blocked at the opposite end thereof in a similar arrangement. This latter arrangement requires that the porosity of the extrudate following drying and calcination is sufficient to function as a wall-flow filter, i.e. the porosity of the substrate monolith is at least 40%, such as at least 45%, e.g. 50% or at least 55% or up to 75%.

As used herein, the terms of "selective catalytic reduction" and "SCR" refer to the catalytic process of reducing oxides of nitrogen to nitrogen (N2) using a nitrogenous reductant. The SCR catalyst may include at least one material selected front: MOR; USY; ZSM-5; ZSM-20; betazeolite; CHA; LEV; AEI; AFX; FER; SAPO; ALPO; vanadium; vanadium oxide; titanium oxide; tungsten oxide; molybdenum oxide; cerium oxide; zirconium oxide; niobium oxide; iron; iron oxide; manganese oxide; copper; molybdenum; tungsten; and mixtures thereof. The support structures for the active components of the SCR catalyst may include any suitable zeolite, zeotype, or non-zeolitic compound. Alternatively, the SCR catalyst may include a metal, a metal oxide, or a mixed oxide as the active component. Transition metal loaded zeolites (e.g., copperchabazite, or Cu-CHA, as well as copper-levyne, or Cu-LEV, as well as Fe-Beta) and zeotypes (e.g., copper-SAPO, or Cu-SAPO) are preferred.

As used herein, the terms of "three-way conversion" and "TWC" refer to a catalytic process that can substantially eliminate HC, CO and NOx from gasoline engine exhaust gases. Typically, a TWC catalyst mainly comprises a platinum group metal (PGM), an oxygen storage component (OSC), and a refractory metal oxide support.

As used herein, the terms of "platinum group metal" and "PGM" refer to one or more chemical elements defined in the Periodic Table of Elements, including platinum, palladium, rhodium, osmium, iridium, and ruthenium, and mixtures thereof.

In some embodiments, the platinum group metal component of the TWC catalyst is selected from platinum, palladium, rhodium, or mixtures thereof. In specific embodiments, the platinum group metal component of the TWC catalyst comprises palladium.

In some embodiments, the TWC catalyst does not comprise an additional platinum group metal (i.e., the TWC comprises only one platinum group metal). In other embodiments, the TWC catalyst comprises an additional platinum group metal. In one embodiment, when present, the additional platinum group metal is selected from platinum, rhodium, and mixtures thereof. In specific embodiments, the additional platinum group metal component comprises rhodium. In one or more specific embodiments, the TWC catalyst comprises a mixture of palladium and rhodium. In other embodiments, the TWC catalyst comprises a mixture of platinum, palladium, and rhodium.

In a preferred embodiment, the TWC catalyst comprises a mixture of palladium and rhodium in a molar ratio of 1:10 to 10:1, preferably 1:5 to 5:1.

The loading of the "PGM" in the particulate filter can be in the range from 0.05 to 5 g/L, preferably 0.1 to 2 g/L, for example 0.2 g/L, 0.5 g/L, 1 g/L, or 1.5 g/L.

As used herein, the terms of "oxygen storage component" and "OSC" refer to an entity that has a multi-valence state and can actively react with reductants such as CO or hydrogen under reduction conditions and then react with oxidants such as oxygen or nitrogen oxides under oxidative conditions. Examples of oxygen storage components include rare earth oxides, particularly ceria, lanthana, praseodymia, neodymia, niobia, europia, samaria, ytterbia, yttria, zirconia, and mixtures thereof in addition to ceria. The rare earth oxide may be in bulk (e.g. particulate) form.

The oxygen storage component can include ceria in a form that exhibits oxygen storage properties. The lattice oxygen of ceria can react with carbon monoxide, hydrogen, or hydrocarbons under rich A/F conditions. In one embodiment, the oxygen storage component for the TWC catalyst comprises a ceria-zirconia composite or a rare earth- stabilized ceria-zirconia

As used herein, the terms of "refractory metal oxide support" and "support" refer to underlying high surface area material upon which additional chemical compounds or elements are carried. The support particles have pores larger than 20 A and a wide pore distribution. As defined herein, such supports, e.g., metal oxide supports, exclude molecular sieves, specifically, zeolites. In particular embodiments, high surface area refractory metal oxide supports can be utilized, e.g., alumina support materials, also referred to as "gamma alumina" or "activated alumina," which typically exhibit a BET surface area in excess of 60 square meters per gram ("$m^2/g$"), often up to about 200 $m^2/g$ or higher. Such activated alumina is usually a mixture of the gamma and delta phases of alumina, but may also contain substantial amounts of eta, kappa, and theta alumina phases. Refractory metal oxides other than activated alumina can be used as a support for at least some of the catalytic components in a given catalyst. For example, bulk ceria, zirconia, alpha alumina, silica, titania, and other materials are known for such use.

In some embodiments, the refractory metal oxide supports for the TWC catalyst independently comprise a compound that is activated, stabilized, or both, selected from the group consisting of alumina, zirconia, alumina-zirconia, lanthana-alumina, lanthana-zirconia-alumina, aluminachromia, ceria, alumina-ceria, and combinations thereof.

As used herein, the terms of "diesel oxidation catalyst" and "DOC" refer to diesel oxidation catalysis, which are well-known in the art. Diesel oxidation catalysts are designed to oxidize CO to $CO_2$ and gas phase HC and an organic fraction of diesel particulates (soluble organic fraction) to $CO_2$ and $H_2O$. Typical diesel oxidation catalysts include platinum and optionally also palladium on a high surface area inorganic oxide support, such as alumina, silica-alumina, titania, silica-titania, and a zeolite. As used herein, the term includes a DEC (Diesel Exotherm Catalyst) with creates an exotherm.

As used herein, the terms of "ammonia oxidation catalyst" and "AMOx" refer to catalysts comprise at least a supported precious metal component, such as one or more platinum group metals (PGMs), which is effective to remove ammonia from an exhaust gas stream. In specific embodiments, the precious metal may include platinum, palladium, rhodium, ruthenium, iridium, silver or gold. In specific embodiments, the precious metal component includes physical mixtures or chemical or atomically-doped combinations of precious metals.

The precious metal component is typically deposited on a high surface area refractory met-al oxide support. Examples of suitable high surface area Refractory Metal Oxides include alumina, silica, titania, ceria, and zirconia, magnesia, barium oxide, manganese oxide, tungsten oxide, and rear earth metal oxide rear earth metal oxide, base metal oxides, as well as physical mixtures, chemical combinations and/or atomically-doped combinations there-of.

As used herein, the terms of "NOx adsorbed catalyst" and "NOx trap (also called Lean NOx trap, abbr. LNT)" refer to catalysts for reducing oxides of nitrogen (NO and $NO_2$) emissions from a lean burn internal combustion engine by means of adsorption. Typical NOx trap includes alkaline earth metal oxides, such as oxides of Mg, Ca, Sr and Ba, alkali metal oxides such as oxides of Li, Na, K, Rb and Cs, and rare earth metal oxides such as oxides of Ce, La, Pr and Nd in combination with precious metal catalysts such as platinum dispersed on an alumina support have been used in the purification of exhaust gas from an internal combustion engine. For NOx storage, baria is usually preferred because it forms nitrates at lean engine operation and releases the nitrates relatively easily under rich conditions.

As used herein, the term of "hydrocarbon trap" refers to catalysts for trapping hydrocarbons during cold operation periods and releasing them for oxidation during higher-temperature operating periods. The hydrocarbon trap may be provided by one or more hydrocarbon (HC) storage components for the adsorption of various hydrocarbons (HC). Typically, hydrocarbon storage material having minimum interactions of precious metals and the material can be used, e.g., a micro-porous material such as a zeolite or zeolite-like material. Preferably, the hydrocarbon storage material is a zeolite, Beta zeolite is particularly preferable since large pore opening of beta zeolite allows hydrocarbon molecules of diesel derived species to be trapped effectively. Other zeolites such as faujasite, chabazite, clinoptilolite, mordenite, silicalite, zeolite X, zeolite Y, ultrastable zeolite Y, ZSM-5 zeolite, offretite, can be used in addition to the beta zeolite to enhance HC storage in the cold start operation.

The loading of the catalytic washcoat can be in the range from 10 to 170 g/L, preferably 25 to 130 g/L, more preferably 45 to 100 g/L.

The washcoat can be coated onto the inlet side, the outlet side, or both sides of the particulate filter.

Another aspect of the present invention relates to a process for preparing a particulate filter for the treatment of exhaust gas from an internal combustion engine, which comprises

i) providing a filter; and
ii) coating the filter with a functional material in a particulate form via a gas carrier through one side of the filter;

wherein before and/or after step ii), the rim part of said side of the filter is covered with a cover and the filter is coated with the functional material in a particulate form via a gas carrier through the uncovered part of said side of the filter and then the cover is removed.

In a preferred embodiment, uncovered surface area of said side of the filer is 20 to 80%, for example 30%, 40%, 50%, 60%, 70%, preferably 30 to 70% of the surface area of said side of the filter.

In a preferred embodiment, the cover is placed coaxially onto said side of the filter. The cover can be a ring-shaped cover.

After coating, the filter coated with the functional material layer can be subjected to drying and calcination. The calcination can be carried out at 350 to 600 °C, or 400 to 500 °C for 15 min to 2 h, or 20 min to 1 h, for example 25 min, 30 min, 40 min or 50 min.

In a preferred embodiment, the particulate filter prepared by the process of the present invention is the particulate filter according to the present invention.

A further aspect of the present invention relates to a method for the treatment of exhaust gas from an internal combustion engine, which comprises flowing the exhaust gas from the engine through the particulate filter according to the present invention or prepared by the process according to the present invention. The exhaust gas comprises unburned hydrocarbons, carbon monoxide, nitrogen oxides, and particulate matter.

## Examples

The present invention is further illustrated by the following examples, which are set forth to illustrate the present invention and is not to be construed as limiting thereof. Unless otherwise noted, all parts and percentages are by weight, and all weight percentages are expressed on a dry basis, meaning excluding water content, unless otherwise indicated. In each of the examples, the filter substrate was made of cordierite.

### Example 1 - Comparative

The particulate filter prepared in example 1 has a Pd/Rh catalytic layer with a PGM loading of 10 g/ft$^3$ (Pd/Rh = 1/1). The particulate filter in example 1 was prepared using a single coat from inlet side of a wall-flow filter substrate. The wall-flow filter substrate had a size of 132.1 mm (D)*146 mm (L), a volume of 2.0 L, a cell density of 300 cells per square inch, a wall thickness of approximately 200 $\mu$m, a porosity of 65% and a mean pore size of 18 $\mu$m in diameter by mercury intrusion measurements.

The Pd/Rh catalytic layer coated onto the substrate contains a prior art three-way conversion (TWC) catalyst composite. The catalytic layer was prepared as following:
Palladium in the form of a palladium nitrate solution was impregnated by planetary mixer onto a refractory alumina and a stabilized ceria-zirconia composite with approximately 40 wt.% ceria to form a wet powder while achieving incipient wetness. Rhodium in the form of a rhodium nitrate solution was impregnated by planetary mixer onto a refractory alumina and a stabilized ceria-zirconia composite with approximately 40 wt.% ceria to form a wet powder while achieving incipient wetness. An aqueous slurry was formed by adding the above powders into water, followed by addition of barium hydroxide and zirconium nitrate solution. The slurry was then milled to a particle size of 90% being 5 $\mu$m. The slurry was then coated from the inlet side of the wall-flow filter substrate and covered the total substrate length using deposition methods known in the art. After coating, the filter substrate plus the catalytic layer were dried at 150°C and then calcined at a temperature of 550°C for about 1 hour. The calcined Pd/Rh catalytic layer has 24.8 wt.% alumina, 68.6 wt.% ceria-zirconia composite, 0.29 wt.% palladium, 0.29 wt.% rhodium, 4.6 wt.% of barium oxide and 1.4 wt.% zirconia oxide. The total loading of the catalytic layer was 0.99 g/in$^3$.

**Example 2**

A particulate filter having a Pd/Rh catalytic layer was prepared according to Example 1, onto which a functional material layer was applied from the inlet side of the filter.

High surface area gamma alumina was applied to form the functional material layer. The alumina was dry milled to a particle size of 90% being 5 microns, 50% being 2.5 microns, and 10% being 1 micron, of which the specific surface area (BET model, 77K nitrogen adsorption measurement) was 147 m$^2\cdot$g$^{-1}$ at fresh state and 70 m$^2\cdot$g$^{-1}$ after 4hr calcination in air at 1000°C. The high surface area gamma alumina, in powder form, was mixed with gas carrier and blown-in into the filter at room temperature.

In order to achieve inhomogeneous alumina loading in the radial direction (in this case higher alumina loading at the center), the blown-in process was carried out in the following steps: (1) an 'O'-shape rubber plate (diameter of the hole in the middle: 90 mm) was placed coaxially onto the front surface of the particulate filter to allow gas passage only through the center of the filter; (2) a first portion of alumina was mixed with gas carrier and blown-in into the filter with the rubber plate, to achieve an average functional material layer loading of 0.025 g/in$^3$, i.e. 1.5 g/L; (3) the rubber plate was removed from the surface; and (4) a second portion of alumina was mixed with gas carrier and blown-in into the filter without the rubber plate, to achieve an average functional material layer loading of 0.041 g/in$^3$, i.e. 2.5 g/L. The total flow rate of gas carrier in steps (2) and (4) were 750 kg/hr. The total average loading of the functional material layer in the particulate filter was 0.066 g/in$^3$, i.e. 4g/L.

After coating, the filter plus the functional material layer were dried and then calcined at a temperature of 450°C for 30 minutes.

**Example 3**

A particulate filter having a Pd/Rh catalytic layer was prepared according to Example 1, onto which a functional material layer was applied from the inlet side of the filter.

The functional material layer applied was a high surface area gamma alumina. The alumina was dry milled to a particle size of 90% being 5 microns, 50% being 2.5 microns, and 10% being 1 micron, of which the specific surface area (BET model, 77K nitrogen adsorption measurement) was 147 m$^2\cdot$g$^{-1}$ at fresh state and 70 m$^2\cdot$g$^{-1}$ after 4hr calcination in air at 1000°C. The high surface area gamma alumina, in powder form, was mixed with gas carrier and blown-in into the filter at room temperature. The flow was guided through a distributor to achieve an even distribution at the filter's inlet side. The flow rate of gas carrier is 750 kg/hr. The average loading of the functional material layer in the particulate filter was 0.066 g/in$^3$, i.e. 4g/L.

After coating, the filter plus the functional material layer were dried and then calcined at a temperature of 450°C for 30 minutes.

**Example 4 - Functional material layer distribution characterization**

Radial distribution of the functional material layer was determined through elemental analysis on defined sample area.

Cores (the lengths of the cores were the same as the length of the filter) within defined radius of a catalyzed gasoline filter were drilled from the filter and grinded into a fine powder, with a grain size smaller than 60 $\mu$m. The fine power, typically 10 g, was then mixed with 1.7 g of cellulose wax (binding aid) before pelletizing in a die at between 20 and 30T to produce a homogeneous sample pellet. The pellet was then analyzed on a Malvern Panalytical Axios FAST wavelength-dispersive X-ray fluorescence (XRF) spectrometer.

Loading of element of interest, in this case aluminum, were quantified through a pre-set working curve and the background aluminum loading was deducted by analyzing the filter sample without functional material layer (i.e. Example 1) in the same method. The percentage of the functional material layer within this defined radius was then calculated by applying the following formula:

$$\text{Percentage}\,(r) = \frac{\text{Amount}\,(r, t) - \text{Amount}\,(r, b)}{\text{Amount}\,(\text{total})} \times 100\%$$

Where Percentage (*r*) refers to the percentage of the functional material layer within defined radius *r*;

Amount (*r,t*) refers to the amount of the functional material layer within defined radius *r*, measured by XRF method of a particulate filter with functional material layer;

Amount (*r,b*) refers to the background of the element within defined radius *r*, measured by XRF method of a particulate filter without applied functional material layer;

Amount (total) refers to the total amount of the functional material layer applied to the particulate filter.

Functional material layer distribution of the particulate filters of Examples 2 and 3 was analyzed at three defined radii according to above described method and the results were listed in Table 1.

**Table 1.** Functional material layer distribution in Examples 2 and 3.

| Radius | 22 mm (1/3R) | 33 mm (1/2R) | 44 mm (2/3R) |
|---|---|---|---|
| Example 2 | 18% | 39% | 64% |
| Example 3 | 12% | 26% | 42% |
| R = 66 mm or 2.6 inch. | | | |

## Example 5 - Testing backpressure and effectiveness

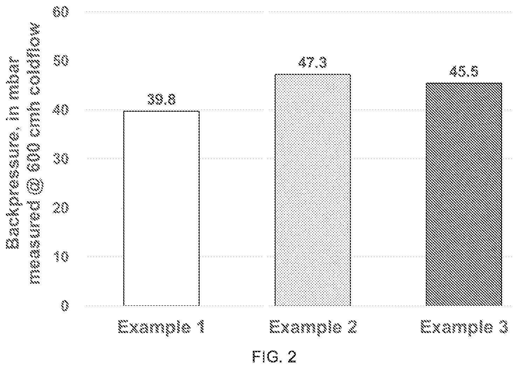

Backpressure characteristics of the above particulate filter examples (Examples 1 to 3) were investigated under cold air flow at 600 cubic meter per hour (cmh). The results were shown in FIG. 2. Filters applied with the functional material layer (Examples 2 and 3) showed very similar backpressure despite of different functional material distribution and they both showed higher backpressure compared to the particulate filter without application of functional material layer (Example 1).

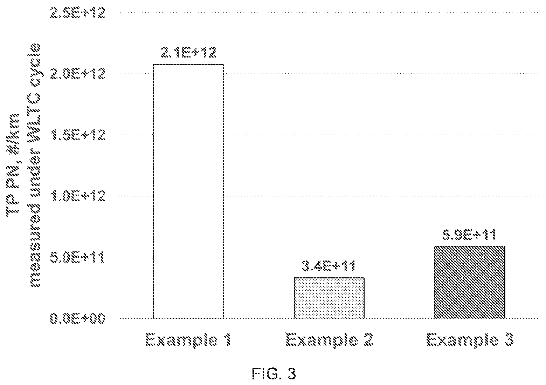

The effectiveness of these particulate filters to remove particulate matters in the exhaust gas was evaluated on an SGE 1.5L turbo gasoline direct injection engine. The particulate filters at fresh state (0 km, or out-of-box state) were placed in close-coupled position and particulate number (PN) after the filter were measured using a PN counter. PN out of the engine without any filters in a WLTC cycle was $4.0 \times 10^{12}$ #/km. As shown in FIG. 3, filters with functional material layer (Examples 2 and 3) showed significantly lower tailpipe (TP) PN emission compared to Example 1. And more surprisingly, the particulate filter of Example 2, with higher functional material layer content in the radial center region, showed only half of PN emission compared to the particulate filter of Example 3, with homogeneous functional material layer distribution.

## Example 6 - Comparative

The particulate filter prepared in example 6 has a Pd/Rh catalytic layer with a PGM loading of 7 g/ft$^3$ (Pd/Rh = 2/5). The particulate filter in Example 6 was prepared using a double coat from first outlet side and then inlet side of a wall-flow filter substrate. The wall-flow filter substrate had a size of 143.8 mm (D)*152.4 mm (L), a volume of 2.47 L, a cell density of 300 cells per square inch, a wall thickness of approximately 200 $\mu$m, a porosity of 65% and a mean pore size of 16 $\mu$m in diameter by mercury intrusion measurements.

The Pd/Rh catalytic layer coated onto the substrate contains a prior art three-way conversion (TWC) catalyst composite. The catalytic layer was prepared as following:
Palladium in the form of a palladium nitrate solution was impregnated by planetary mixer onto a refractory alumina and a stabilized ceria-zirconia composite with approximately 40 wt.% ceria to form a wet powder while achieving incipient wetness. Rhodium in the form of a rhodium nitrate solution was impregnated by planetary mixer onto a refractory alumina and a stabilized ceria-zirconia composite with approximately 40 wt.% ceria to form a wet powder while achieving incipient wetness. An aqueous slurry was formed by adding the above powders into water, followed by adding barium hydroxide and zirconium nitrate solution. The slurry was then milled to a particle size of 90% being 5 $\mu$m. Coating of the slurry onto the filter substrate comprises: 1) coating the slurry from the outlet side of the wall-flow filter using deposition methods known in the art, which covered 55% of total substrate length; 2) drying the filter substrate plus the first catalytic layer at 150°C; 3) coating the same slurry from the inlet side of the wall-flow filter substrate which again covered 55% of total substrate length; 4) drying again at 150°C and 5) calcinating at temperature of 550°C for about 1 hour. The calcined Pd/Rh catalytic layer has 24.9 wt.% alumina, 68.8 wt.% ceria-zirconia composite, 0.09 wt.% palladium, 0.23 wt.% rhodium, 4.6 wt.% of barium oxide and 1.4 wt.% zirconia oxide. The total loading of the catalytic layer was 1.23 g/in$^3$,

**Example 7**

A particulate filter having a Pd/Rh catalytic layer was prepared according to Example 6, onto which a functional material layer was applied from the inlet side of the filter.

The functional material layer applied was a high surface area gamma alumina. The alumina was dry milled to a particle size of 90% being 5 microns, 50% being 2.5 microns, and 10% being 1 micron, of which the specific surface area (BET model, 77K nitrogen adsorption measurement) was 147 $m^2 \cdot g^{-1}$ at fresh state and 70 $m^2 \cdot g^{-1}$ after 4hr calcination in air at 1000°C. The high surface area gamma alumina, in powder form, was mixed with gas carrier and blown-in into the filter at room temperature.

In order to achieve inhomogeneous alumina loading in the radial direction (in this case higher alumina loading at the center), the blown-in process was carried out in the following steps: (1) an 'O'-shape rubber plate (diameter of the hole in the middle: 96 mm) was placed coaxially onto the front surface of the particulate filter to allow gas passage only through the center of the filter; (2) a first portion of alumina was mixed with gas carrier and blown-in into the filter with the rubber plate, to achieve an average functional material layer loading of 0.018 $g/in^3$, i.e. 1.1 g/L; (3) the rubber plate was removed from the surface; and (4) a second portion of alumina was mixed with gas carrier and blown-in into the filter without the rubber plate, to achieve an average functional material layer loading of 0.031 $g/in^3$, i.e. 1.9 g/L. The total flow rate of gas carrier in process steps (2) and (4) were 750 kg/hr. The total average loading of the functional material layer in the particulate filter was 0.049 $g/in^3$, i.e. 3g/L.

After coating, the filter plus the functional material layer were dried and then calcined at a temperature of 450°C for 30 minutes.

**Example 8**

A particulate filter having a Pd/Rh catalytic layer was prepared according to Example 6, onto which a functional material layer was applied from the inlet side of the filter.

The functional material layer applied was a high surface area gamma alumina. The alumina was dry milled to a particle size of 90% being 5 microns, 50% being 2.5 microns, and 10% being 1 micron, of which the specific surface area (BET model, 77K nitrogen adsorption measurement) was 147 $M^2 \cdot g^{-1}$ at fresh state and 70 $m^2 \cdot g^{-1}$ after 4hr calcination in air at 1000°C. The high surface area gamma alumina, in powder form, was mixed with gas carrier and blown-in into the filter at room temperature. The flow was guided through a distributor to achieve an even distribution at the filter's inlet side. The flow rate of gas carrier is 750 kg/hr. The average loading of the functional material layer in the particulate filter was 0.049 $g/in^3$.

After coating, the filter plus the functional material layer were dried and then calcined at a temperature of 450°C for 30 minutes.

**Example 9**

A particulate filter having a Pd/Rh catalytic layer was prepared according to Example 6, onto which a functional material layer was applied from the inlet side of the filter.

The functional material layer applied was a high surface area gamma alumina. The alumina was dry milled to a particle size of 90% being 5 microns, 50% being 2.5 microns, and 10% being 1 micron, of which the specific surface area (BET model, 77K nitrogen adsorption measurement) was 147 $m^2 \cdot g^{-1}$ at fresh state and 70 $m^2 \cdot g^{-1}$ after 4hr calcination in air at 1000°C. The high surface area gamma alumina, in powder form, was mixed with gas carrier and blown-in into the filter at room temperature.

In order to achieve inhomogeneous alumina loading in the radial direction (in this case higher alumina loading at the center), the blown-in process was carried out in the following steps: (1) an 'O'-shape rubber plate (diameter of the hole in the middle: 96 mm) was placed coaxially onto the front surface of the particulate filter to allow gas passage only through the center of the filter; (2) a first portion of alumina was mixed with gas carrier and blown-in into the filter with the rubber plate, to achieve an average functional material layer loading of 0.025 $g/in^3$, i.e. 1.5 g/L; (3) the rubber plate was removed from the surface; and (4) a second portion of alumina was mixed with gas carrier and blown-in into the filter without the rubber plate, to achieve an average functional material layer loading of 0.025 $g/in^3$, i.e. 1.5 g/L. The flow rate of gas carrier in process steps (2) and (4) were 750 kg/hr. The total average loading of the functional material layer in the particulate filter was 0.049 $g/in^3$, i.e. 3g/L.

After coating, the filter plus the functional material layer were dried and then calcined at a temperature of 450°C for 30 minutes.

### Example 10

A particulate filter having a Pd/Rh catalytic layer was prepared according to Example 6, onto which a functional material layer was applied from the inlet side of the filter.

The functional material layer applied was a high surface area gamma alumina. The alumina was dry milled to a particle size of 90% being 5 microns, 50% being 2.5 microns, and 10% being 1 micron, of which the specific surface area (BET model, 77K nitrogen adsorption measurement) was 147 $m^2 \cdot g^{-1}$ at fresh state and 70 $m^2 \cdot g^{-1}$. after 4hr calcination in air at 1000°C. The high surface area gamma alumina, in powder form, was mixed with gas carrier and blown-in into the filter at room temperature.

In order to achieve inhomogeneous alumina loading in the radial direction (in this case lower alumina loading at the center), the blown-in process was carried out in the following steps: (1) a round rubber plate (diameter: 60 mm) was placed coaxially onto the front surface of the particulate filter to allow gas passage only through the rim of the filter; (2) a first portion of alumina was mixed with gas carrier and blown-in into the filter with the rubber plate, to achieve an average functional material layer loading of 0.008 $g/in^3$, i.e. 0.5 g/L; (3) the rubber plate was removed from the surface; and (4) a second portion of alumina was mixed with gas carrier and blown-in into the filter without the rubber plate, to achieve an average functional material layer loading of 0.041 $g/in^3$, i.e. 2.5 g/L. The flow rate of gas carrier in process steps (2) and (4) were 750 kg/hr. The total average loading of the functional material layer in the particulate filter was 0.049 $g/in^3$, i.e. 3g/L.

After coating, the filter plus the functional material layer were dried and then calcined at a temperature of 450°C for 30 minutes.

### Example 11 - Characterization of the functional material layer distribution

Functional material layer distribution of Examples 7 to 10 was analyzed in the same way as described in Example 4. Samples were also taken and analyzed and the results were listed in Table 2.

**Table 2.** Functional material layer distribution in Examples 7 to 10.

| Radius | 24 mm (1/3R) | 36 mm (1/2R) | 48 mm (2/3R) |
|---|---|---|---|
| Example 7 | 17% | 38% | 64% |
| Example 8 | 10% | 24% | 42% |
| Example 9 | 22% | 47% | 71% |
| Example 10 | 8% | 25% | 53% |
| R = 72 mm or 2.83 inch. | | | |

### Example 12 - Testing backpressure and effectiveness

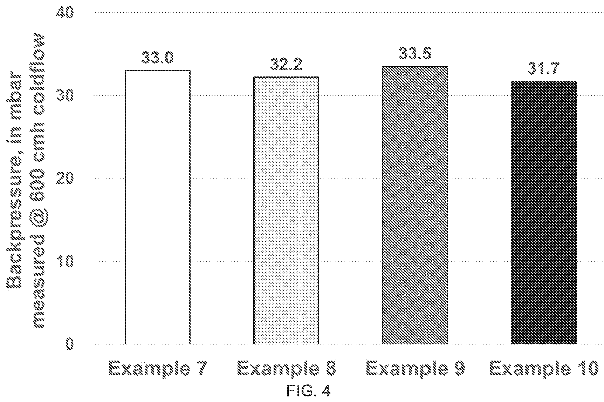

Backpressure characteristics of the above particulate filter examples (Examples 7 to 10) were investigated under cold air flow at 600 cubic meter per hour (cmh). The results were shown in FIG. 4. Despite different functional material distribution in the radial direction of these catalyzed filters, they showed very similar backpressure under the testing conditions.

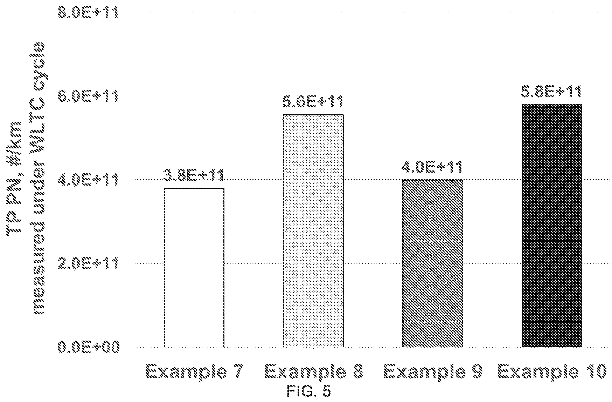

The effectiveness for these particulate filters to remove particulate matters in the exhaust gas was evaluated on an SGE 1.5L turbo gasoline direct injection engine. Particulate filters at fresh state (0 km, or out-of-box state) were placed in close-coupled position and particulate number (PN) after the filter were measured using a PN counter. PN out of the engine without any filters in a WLTC cycle was $4.0 \times 10^{12}$ #/km. As shown in FIG. 5, filters with higher functional material layer content in the radial center region (Examples 7 and 9) showed c.a. 33% lower tailpipe PN emission compared to those with more homogeneous functional material layer distribution (Example 8).

### Claims

1. A particulate filter for the treatment of exhaust gas from an internal combustion engine, wherein the particulate filter comprises a functional material layer, and the amount of the functional material layer in the region which is around the whole central axis of the particulate filter and accounts for 11.1 vol. % of the total volume of the particulate filter, is in the range from 13 to 40 wt%, based on the total weight of the functional material layer;

   wherein the functional material layer comprises at least one inorganic material, wherein the inorganic material is selected from alumina, zirconia, ceria, silica, titania, magnesium oxide, zinc oxide, manganese oxide, calcium oxide, silicate zeolite, alumino silicate zeolite, a rare earth metal oxide other than ceria, a mixed oxide comprising two or more of Al, Zr, Ti, Si, and Ce, cerium zirconium mixed oxide, hydrated alumina, calcium carbonate and zinc carbonate; and

wherein the inorganic material has a D90 of 3 to 10 μm, a D50 of 1.8 to 6 μm, and a D10 of 0.8 to 1.5 μm, determined by measuring the particle size distribution by using laser diffraction particle size distribution analyzer.

2. The particulate filter according to claim 1, wherein the amount of the functional material layer in the region which is around the whole central axis of the particulate filter and accounts for 11.1 vol. % of the total volume of the particulate filter, is in the range from 15 to 30 wt.%, based on the total weight of the functional material layer.

3. The particulate filter according to claim 1 or 2, wherein the amount of the functional material layer in the region which is around the whole central axis of the particulate filter and accounts for 25 vol. % of the total volume of the particulate filter, is in the range from 28 to 60 wt%, preferably from 31 to 55 wt.%, based on the total weight of the functional material layer.

4. The particulate filter according to any of claims 1 to 3, wherein the amount of the functional material layer in the region which is around the whole central axis of the particulate filter and accounts for 44.4 vol. % of the total volume of the particulate filter, is in the range from 40 to 90 wt%, preferably from 56 to 80 wt%, based on the total weight of the functional material layer.

5. The particulate filter according to any of claims 1 to 4, wherein the content of the functional material layer in the region which is around the whole central axis of the particulate filter and accounts for 44.4 vol. % of the total volume of the particulate filter is higher than the content of the functional material layer in the remainder region of the particulate filter.

6. The particulate filter according to any of claims 1 to 5, wherein the average loading of the functional material layer is in the range from 0.5 to 20 g/L.

7. The particulate filter according to claim 6, wherein the average loading of the functional material layer is in the range from 1 to 10 g/L.

8. The particulate filter according to claim 6, wherein the average loading of the functional material layer is in the range from 1.5 to 7.5 g/L.

9. The particulate filter according to claim 6, wherein the average loading of the functional material layer is in the range from 1.5 to 4.5 g/L.

10. The particulate filter according to any of claims 1 to 9, wherein the particulate filter further comprises a catalytic washcoat, wherein the catalytic washcoat comprises one or more of a selective catalytic reduction (SCR) catalyst, a diesel oxidation catalyst (DOC), a three-way con- version (TWC) catalyst, an AMOx catalyst, a NOx trap, a NOx absorber catalyst, a hydrocarbon trap catalyst; wherein the catalytic washcoat is preferably applied to the particulate filter prior to application of the functional material layer.

11. A process for preparing a particulate filter for the treatment of exhaust gas from an internal combustion engine, wherein the particulate filter is a particulate filter according to any of claims 1 to 10, which comprises i) providing a filter; and ii) coating the filter with a functional material in a particulate form via a gas carrier through one side of the filter; wherein before and/or after step ii), the rim part of said side of the filter is covered with a cover and the filter is coated with the functional material in a particulate form via a gas carrier through the uncovered part of said side of the filter and then the cover is removed.

12. The process according to claim 11, wherein uncovered surface area of said side of the filter is 20 to 80%, preferably 30 to 70% of the surface area of said side of the filter.

13. The process according to claim 11 or 12, wherein the cover is placed coaxially onto said side of the filter.

14. A method for the treatment of exhaust gas from an internal combustion engine, which comprises flowing the exhaust gas from the engine through the particulate filter according to any one of claims 1 to 10 or prepared by the process according to any of claims 11 to 13.

15. The method according to claim 14, wherein the exhaust gas comprises unburned hydrocarbons, carbon monoxide, nitrogen oxides, and particulate matter.

**Patentansprüche**

1. Partikelfilter für die Behandlung von Abgas aus einem Verbrennungsmotor, wobei der Partikelfilter eine Funktionsmaterialschicht umfasst, und die Menge der Funktionsmaterialschicht in der Region, die um die gesamte Mittelachse des Partikelfilters herum liegt und 11,1 Vol.-% des Gesamtvolumens des Partikelfilters ausmacht, in dem Bereich von 13 bis 40 Gew.-%, basierend auf dem Gesamtgewicht der Funktionsmaterialschicht, liegt;

    wobei die Funktionsmaterialschicht mindestens ein anorganisches Material umfasst, wobei das anorganische Material aus Tonerde, Zirconiumoxid, Cerodixid, Siliciumdioxid, Titandioxid, Magnesiumoxid, Zinkoxid, Manganoxid, Calciumoxid, Silicatzeolith, Aluminosilicatzeolith, einem Seltenerdmetalloxid außer Cerdioxid, einem Mischoxid, umfassend zwei oder mehr von Al, Zr, Ti, Si und Ce, Cerzirconiummischoxid, hydratisierter Tonerde, Calciumcarbonat und Zinkcarbonat ausgewählt ist; und
    wobei das anorganische Material einen D90 von 3 bis 10 μm, einen D50 von 1,8 bis 6 μm und einen D10 von 0,8 bis 1,5 μm aufweist, bestimmt durch Messen der Partikelgrößenverteilung durch Verwenden eines Laserbeugungspartikelgrößenverteilungsanalysators.

2. Partikelfilter nach Anspruch 1, wobei die Menge der Funktionsmaterialschicht in der Region, die um die gesamte Mittelachse des Partikelfilters herum liegt und 11,1 Vol.-% des Gesamtvolumens des Partikelfilters ausmacht, in dem Bereich von 15 bis 30 Gew.-%, basierend auf dem Gesamtgewicht der Funktionsmaterialschicht, liegt.

3. Partikelfilter nach Anspruch 1 oder 2, wobei die Menge der Funktionsmaterialschicht in der Region, die um die gesamte Mittelachse des Partikelfilters herum liegt und 25 Vol.-% des Gesamtvolumens des Partikelfilters ausmacht, in dem Bereich von 28 bis 60 Gew.-%, vorzugsweise von 31 bis 55 Gew.-%, basierend auf dem Gesamtgewicht der Funktionsmaterialschicht, liegt.

4. Partikelfilter nach einem der Ansprüche 1 bis 3, wobei die Menge der Funktionsmaterialschicht in der Region, die um die gesamte Mittelachse des Partikelfilters herum liegt und 44,4 Vol.-% des Gesamtvolumens des Partikelfilters ausmacht, in dem Bereich von 40 bis 90 Gew.-%, vorzugsweise von 56 bis 80 Gew.-%, basierend auf dem Gesamtgewicht der Funktionsmaterialschicht, liegt.

5. Partikelfilter nach einem der Ansprüche 1 bis 4, wobei der Gehalt der Funktionsmaterialschicht in der Region, die um die gesamte Mittelachse des Partikelfilters herum liegt und 44,4 Vol.-% des Gesamtvolumens des Partikelfilters ausmacht, höher als der Gehalt der Funktionsmaterialschicht in der verbleibenden Region des Partikelfilters ist.

6. Partikelfilter nach einem der Ansprüche 1 bis 5, wobei die durchschnittliche Beladung der Funktionsmaterialschicht in dem Bereich von 0,5 bis 20 g/L liegt.

7. Partikelfilter nach Anspruch 6, wobei die durchschnittliche Beladung der Funktionsmaterialschicht in dem Bereich von 1 bis 10 g/L liegt.

8. Partikelfilter nach Anspruch 6, wobei die durchschnittliche Beladung der Funktionsmaterialschicht in dem Bereich von 1,5 bis 7,5 g/L liegt.

9. Partikelfilter nach Anspruch 6, wobei die durchschnittliche Beladung der Funktionsmaterialschicht in dem Bereich von 1,5 bis 4,5 g/L liegt.

10. Partikelfilter nach einem der Ansprüche 1 bis 9, wobei der Partikelfilter ferner einen katalytischen Washcoat umfasst, wobei der katalytische Washcoat einen oder mehrere von einem Katalysator für selektive katalytische Reduktion (SCR), einem Diesel-Oxidationskatalysator (DOC), einem Dreiwege-Umwandlungskatalysator (TWC-Katalysator), einem AMOx-Katalysator, einem NOx-Trap, einem NOx-Absorber-Katalysator, einem Kohlenwasserstoff-Trap-Katalysator umfasst; wobei der katalytische Washcoat vorzugsweise auf den Partikelfilter vor einer Aufbringung der Funktionsmaterialschicht aufgebracht wird.

11. Prozess zum Herstellen eines Partikelfilters für die Behandlung von Abgas aus einem Verbrennungsmotor, wobei der

**EP 4 255 605 B1**

Partikelfilter ein Partikelfilter nach einem der Ansprüche 1 bis 10 ist, der i) Bereitstellen eines Filters; und ii) Beschichten des Filters mit einem Funktionsmaterial in einer Partikelform über einen Gasträger durch eine Seite des Filters umfasst; wobei vor und/oder nach Schritt ii) der Randteil der Seite des Filters mit einer Abdeckung bedeckt wird und der Filter über einen Gasträger durch den unbedeckten Teil der Seite des Filters mit dem Funktionsmaterial in einer Partikelform beschichtet wird und dann die Abdeckung entfernt wird.

12. Prozess nach Anspruch 11, wobei die unbedeckte Oberfläche der Seite des Filters 20 bis 80 %, vorzugsweise 30 bis 70 % der Oberfläche der Seite des Filters beträgt.

13. Prozess nach Anspruch 11 oder 12, wobei die Abdeckung auf die Seite des Filters koaxial aufgesetzt wird.

14. Verfahren für die Behandlung von Abgas aus einem Verbrennungsmotor, der ein Strömen des Abgases aus dem Motor durch den Partikelfilter nach einem der Ansprüche 1 bis 10 umfasst oder dr durch den Prozess nach einem der Ansprüche 11 bis 13 hergestellt wird.

15. Verfahren nach Anspruch 14, wobei das Abgas unverbrannte Kohlenwasserstoffe, Kohlenmonoxid, Stickoxide und Feststoffpartikel umfasst.

**Revendications**

1. Filtre à particules destiné au traitement d'un gaz d'échappement provenant d'un moteur à combustion interne, dans lequel le filtre à particules comprend une couche de matériau fonctionnel, et la quantité de la couche de matériau fonctionnel dans la région qui est autour de l'axe central entier du filtre à particules et représente 11,1 % vol. du volume total du filtre à particules, est dans la plage allant de 13 à 40 % en poids, en fonction du poids total de la couche de matériau fonctionnel ;

   dans lequel la couche de matériau fonctionnel comprend au moins un matériau inorganique, dans lequel le matériau inorganique est choisi parmi alumine, zircone, oxyde de cérium, silice, dioxyde de titane, oxyde de magnésium, oxyde de zinc, oxyde de manganèse, oxyde de calcium, zéolite silicate, zéolite aluminosilicate, un oxyde de métal des terres rares autre qu'oxyde de cérium, un oxyde mixte comprenant deux ou plus parmi Al, Zr, Ti, Si et Ce, oxyde mixte de cérium et de zirconium, alumine hydratée, carbonate de calcium et carbonate de zinc ; et
   dans lequel le matériau inorganique a une D90 de 3 à 10 $\mu$m, une D50 de 1,8 à 6 $\mu$m, et une D10 de 0,8 à 1,5 $\mu$m, déterminées en mesurant la distribution granulométrique taille de particules à l'aide d'un analyseur de distribution granulométrique à diffraction laser.

2. Filtre à particules selon la revendication 1, dans lequel la quantité de la couche de matériau fonctionnel dans la région qui est autour de l'axe central entier du filtre à particules et représente 11,1 % vol. du volume total du filtre à particules, est dans la plage allant de 15 à 30 % en poids, en fonction du poids total de la couche de matériau fonctionnel.

3. Filtre à particules selon la revendication 1 ou 2, dans lequel la quantité de la couche de matériau fonctionnel dans la région qui est autour de l'axe central entier du filtre à particules et représente 25 % vol. du volume total du filtre à particules, est dans la plage allant de 28 à 60 % en poids, de préférence de 31 à 55 % en poids, en fonction du poids total de la couche de matériau fonctionnel.

4. Filtre à particules selon l'une quelconque des revendications 1 à 3, dans lequel la quantité de la couche de matériau fonctionnel dans la région qui est autour de l'axe central entier du filtre à particules et représente 44,4 % vol. du volume total du filtre à particules, est dans la plage allant de 40 à 90 % en poids, de préférence de 56 à 80 % en poids, en fonction du poids total de la couche de matériau fonctionnel.

5. Filtre à particules selon l'une quelconque des revendications 1 à 4, dans lequel la teneur de la couche de matériau fonctionnel dans la région qui est autour de l'axe central entier du filtre à particules et représente 44,4 % vol. du volume total du filtre à particules est supérieure à la teneur de la couche de matériau fonctionnel dans la région restante du filtre à particules.

6. Filtre à particules selon l'une quelconque des revendications 1 à 5, dans lequel le chargement moyen de la couche de matériau fonctionnel est dans la plage allant de 0,5 à 20 g/L.

**7.** Filtre à particules selon la revendication 6, dans lequel le chargement moyen de la couche de matériau fonctionnel est dans la plage allant de 1 à 10 g/L.

**8.** Filtre à particules selon la revendication 6, dans lequel le chargement moyen de la couche de matériau fonctionnel est dans la plage allant de 1,5 à 7,5 g/L.

**9.** Filtre à particules selon la revendication 6, dans lequel le chargement moyen de la couche de matériau fonctionnel est dans la plage allant de 1,5 à 4,5 g/L.

**10.** Filtre à particules selon l'une quelconque des revendications 1 à 9, dans lequel le filtre à particules comprend en outre une couche d'imprégnation catalytique, dans lequel la couche d'imprégnation catalytique comprend un ou plusieurs parmi un catalyseur de réduction catalytique sélective (SCR), un catalyseur d'oxydation diesel (DOC), un catalyseur de conversion à trois voies (TWC), un catalyseur AMOx, un piège à NOx, un catalyseur d'absorption de NOx, un catalyseur de piégeage d'hydrocarbures ; dans lequel la couche d'imprégnation catalytique est de préférence appliquée au filtre à particules avant application de la couche de matériau fonctionnel.

**11.** Processus permettant de préparer un filtre à particules destiné au traitement d'un gaz d'échappement provenant d'un moteur à combustion interne, dans lequel le filtre à particules est un filtre à particules selon l'une quelconque des revendications 1 à 10, qui comprend i) la fourniture d'un filtre ; et ii) le revêtement du filtre avec un matériau fonctionnel sous une forme particulaire par l'intermédiaire d'un support gazeux à travers un côté du filtre ; dans lequel avant et/ou après l'étape ii), la partie de rebord dudit côté du filtre est couverte d'une couverture et le filtre est revêtu du matériau fonctionnel sous une forme particulaire par l'intermédiaire d'un support gazeux à travers la partie non couverte dudit côté du filtre puis la couverture est retirée.

**12.** Processus selon la revendication 11, dans lequel la superficie non couverte dudit côté du filtre va de 20 à 80 %, de préférence 30 à 70 % de la superficie dudit côté du filtre.

**13.** Processus selon la revendication 11 ou 12, dans lequel la couverture est placée coaxialement sur ledit côté du filtre.

**14.** Procédé destiné au traitement d'un gaz d'échappement provenant d'un moteur à combustion interne, qui comprend l'écoulement du gaz d'échappement provenant du moteur à travers le filtre à particules selon l'une quelconque des revendications 1 à 10 ou préparé par le processus selon l'une quelconque des revendications 11 à 13.

**15.** Procédé selon la revendication 14, dans lequel le gaz d'échappement comprend des hydrocarbures non brûlés, du monoxyde de carbone, des oxydes d'azote et des matières particulaires.

FIG. 1 (a)

FIG. 1 (b)

16

FIG. 2

FIG. 3

FIG. 4

FIG. 5

**EP 4 255 605 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1835262016 A
- US 2011162346 A1
- US 2013149458 A1